# EUROPÄISCHE PATENTSCHRIFT

(11) **EP 1 591 740 B1**
(45) Veröffentlichungstag und Bekanntmachung des Hinweises auf die Patenterteilung: **26.09.2007**
(21) Anmeldenummer: 04405271.0
(22) Anmeldetag: 30.04.2004
(51) Int. Cl.: F28D 21/00, F28F 21/08

(54) **Wärmetauscher und Installation zur Entnahme von Wärme aus Abwasser**
Heat exchanger and installation for extracting heat from waste water
Echangeur de chaleur et installation de récupération de la chaleur des eaux usées

(43) Veröffentlichungstag der Anmeldung: 02.11.2005
(73) Patentinhaber: Ligrufa AG, 8037 Zürich (CH)
(72) Erfinder: Studer, Urs, 8049 Zürich (CH)
(74) Vertreter: Frei Patent Attorneys

(56) Entgegenhaltungen:
- EP-A- 1 215 460
- DE-A- 2 742 025
- DE-A- 3 607 207
- DE-U- 8 517 585
- US-A- 4 283 464
- US-A- 5 857 515
- PATENT ABSTRACTS OF JAPAN Bd. 2003, Nr. 04, 2. April 2003 (2003-04-02) -& JP 2002 348942 A (KUBOTA CORP), 4. Dezember 2002 (2002-12-04)

## Beschreibung

Die Erfindung betrifft Wärmetauschersysteme und Installationen zur Entnahme von Abwärme aus Abwasser.

Solche Wärmetauschersysteme sind bspw. aus der deutschen Patentschrift 197 19 311 und auch aus der EP-A-1215460 bekannt. Es hat sich herausgestellt, dass ein direkter Kontakt einer vorzugsweise metallischen Wärmetauscherfläche mit dem Abwasser wichtig ist, damit ein Wirkungsgrad erzielt werden kann, bei dem die Wirtschaftlichkeit gewährleistet ist. Dies bedingt aber, dass diese Wärmetauscherfläche einerseits so ausgebildet ist, dass sie nicht zu rasch verschmutzt und andererseits dass sie den behördlichen Anforderungen genügt, d.h. beispielsweise dass sie begehbar ist und mit den üblichen Reinigungsdüsen gereinigt werden kann.

Kanalisationen bzw. Abwasserkanäle sind naturgemäss hochgradig verschmutzungsanfällig. Eine Schicht aus Verschmutzungen auf der Wärmetauschfläche wirkt sich natürlich negativ auf den Wärmeübergang aus.

Im Hinblick auf den Wärmeübergang besonders störend ist die sogenannte Sielhaut. Bei dieser handelt es sich um einen Biofilm, welcher Gegenstände überzieht, die über längere Zeit nicht reinem Wasser ausgesetzt sind.

Es ist bekannt, dass Legierungen aus gewissen Metallen die Bildung von Biofilmen beeinträchtigen. Insbesondere hat sich gezeigt, dass die Tendenz zum Anlagem von Biofilmen an Kupferlegierungen stark reduziert ist.

Als Material für Wärmetauscher in Kanalisationen oder Abwasserkanälen kommen Kupferlegierungen mit einer ausreichenden Kupferkonzentration aber nicht in Frage. Dies erstens weil Kupfer im Abwasser ab einer gewissen Konzentration die Funktionsfähigkeit von Kläranlagen beeinträchtigt, und es aus diesem Grund als Baumaterial nicht bewilligt wird. Zweitens wird Kupfer auch relativ rasch abgetragen (Abrieb). Dies wirkt sich negativ auf die Lebensdauer der Wärmetauscher aus.

Es ist Aufgabe der Erfindung, ein Wärmetauschersystem zur Entnahme von Abwärme aus in einer Kanalisation oder einem Abwasserkanal fliessendem Abwasser zur Verfügung zu stellen, bei welchem eine reduzierte Tendenz zur Bildung einer Sielhaut besteht. Es ist weiter Aufgabe der Erfindung, eine entsprechende Installation zur Verfügung zu stellen.

Diese Aufgabe wird gelöst durch die Erfindung, wie sie in den Patentansprüchen definiert ist.

Erfindungsgemäss besitzt ein Wärmetauschersystem mindestens einen Oberflächenbereich aus Kupfer oder einer kupferhaltigen Legierung. Dieser macht vorzugsweise nur einen kleinen Prozentsatz - bspw. weniger als 5% oder weniger als 2% - der Wärmetauschfläche aus. Er ist so angeordnet, dass über die Wärmetauschfläche strömendes Abwasser möglichst vor der Wärmetauschfläche oder am Anfang der Wärmetauschfläche über die genannten Oberflächenbereiche strömt.

Die Erfindung beruht auf der Erkenntnis, dass die Biofilm-beeinträchtigende Wirkung einer Kupferkonzentration an der Kanalisationsoberfläche auch in einem gewissen Bereich in Strömungsrichtung hinter den genannten Oberflächen anhält. Dies hat sich in Messungen bestätigt.

Gemäss einer bevorzugten Ausführungsform sind die Oberflächenbereiche in der Form mindestens eines auswechselbaren, sich quer über die Rinne erstreckenden Bandes vorhanden. Wenn die Länge der gesamten Wärmetauschfläche einen gewissen, von der durchschnittlichen Zusammensetzung des Abwassers abhängenden Wert überschreitet, kann mehr als ein Band vorhanden sein. Bspw. kann alle 1-5 m ein Kupferband einer Breite von bspw. 0,5-5 cm angeordnet sein.

Es hat sich ebenfalls gezeigt, dass die Wirkung des Kupfers - möglicherweise aufgrund der einsetzenden Bildung von weniger wirksamen Komplexen - in einem gewissen Abstand von den Oberflächenbereichen nachlässt. Der allenfalls im Abwasser verbleibende kleine Kupfergehalt ist unschädlich für Abwasserreinigungsanlagen. Er ist kleiner als der Kupfergehalt, welcher durch kupferhaltige Dachrinnen etc. verursacht wird. Er ist auch wesentlich kleiner als der maximale Kupfergehalt gemäss amtlichen Vorschriften. Die Kupferfläche ist auch wesentlich geringer als die maximale erlaubte Kupferfläche von Dächern. Beispielsweise in der Schweiz muss eine Versickerungsanlage zur Verfügung gestellt werden, wenn eine Kupferfläche von 50 m² überschritten wird.

Anstelle von Bändern können die Oberflächenbereiche auch andere Formen aufweisen. Sie können bspw. auch flächig sein und/oder in ihrer Breite der lokal zu erwartenden darüber hinwegströmenden Abwassermenge angepasst sein. Vorzugsweise sind sie so angeordnet, dass mindestens ein Grossteil der bei geringem Abwasseranfall bestehenden Wassertrajektorien über die Oberflächenbereiche führen. Bei einer als laminar angenommenen Strömung bedeutet das näherungsweise, dass die Oberflächenbereiche in einer Projektion entlang der Strömungsrichtung auf eine Konturlinie mindestens die Hälfte eines unteren Bereiches der Konturlinie ausmachen.

Im Folgenden werden Ausführungsformen der Erfindung anhand von Zeichnungen im Detail beschrieben. In den Zeichnungen zeigen:
Fig. 1: Eine schematische Ansicht einer unteren Hälfte einer Kanalisationsröhre, von der ein Bereich als Wärmetauschfläche ausgestaltet ist und welche mit Kupferbändern als Oberflächenbereichen gemäss der Erfindung versehen ist.
Fig. 2 eine zu Fig. 1 analoge Ansicht, wobei die Kupferbänder eine andere Länge haben
Fig. 3 eine schematische Draufsicht auf einen Ausschnitt aus einem Wärmetauscherelement
Fig. 4 eine schematische Draufsicht auf einen Ausschnitt aus einem weiteren Wärmetauscherelement.

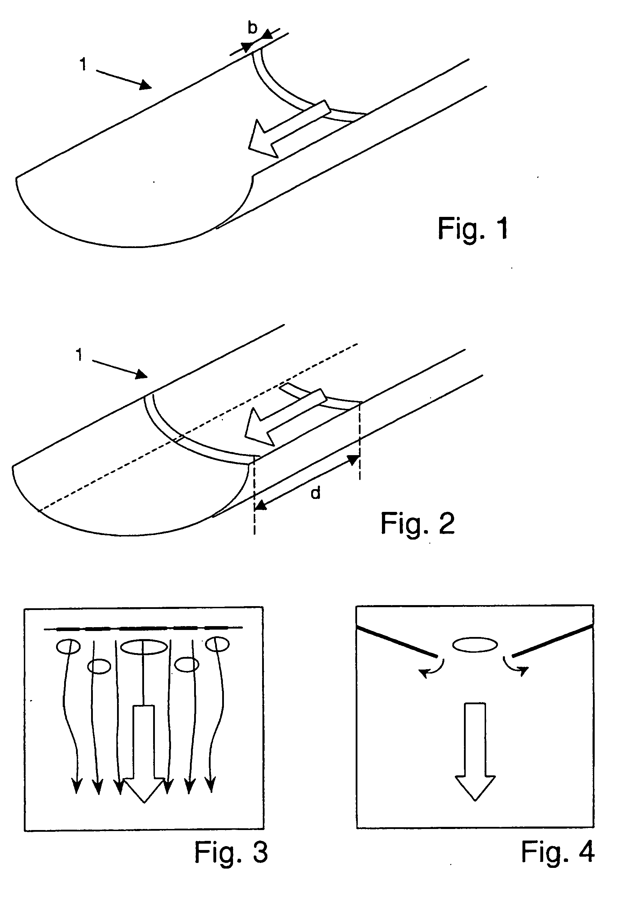

Die in **Fig. 1** nur sehr schematisch dargestellte Kanalisationsröhre 1 wird von Abwasser in der Richtung des Pfeils durchflossen. Die Kanalisationsröhre ist üblicherweise aus Beton gefertigt. In einem Bereich ist jedoch ein Wärmetauschersystem mit mindestens einem Wärmetauscherelement eingebracht, wo die Betonoberfäche durch eine üblicherweise metallische Wärmetauschfläche ersetzt oder durch sie überdeckt ist. Unter der Wärmetauschfläche fliesst ein Wärmeaustauschmedium, das zwischen dem Wärmetauscher und einer Wärmepumpe zirkuliert.

Es gibt verschiedene Arten der Ausgestaltung von Wärmetauschersystemen. Beispielsweise können Kanalisationsröhrensegmente bereichsweise durch Wärmetausch-Kanalisationsröhrensegmente ersetzt sein. Wärmetauscher können auch in ein Bett einer Trockenwetterrinne eingebracht, auf die Kanalisationsröhrensegmente aufgelegt etc. sein. Es können Versorgungsröhren zur Versorgung der Wärmetauscher mit dem Wärmeaustauschmedium innerhalb oder ausserhalb der Kanalisationsröhren vorgesehen sein. Häufig besitzt das Wärmetauschersystem eine Reihe von aneinander anliegenden oder voneinander beabstandeten Wärmetauscherelementen. Weitere Informationen zu gewissen Ausgestaltungen von Wärmetauschersystemen findet man in der deutschen Patentschrift 197 19 311, auf deren Inhalt bezüglich der Realisierung von Installationen zur Entnahme von Wärme aus Abwasser hier ausdrücklich verwiesen wird. Die Erfindung betrifft jegliche Ausgestaltung von Wärmetauschern für in einer Kanalisationröhre oder -rinne fliessende Abwasser.

Die erfindungsgemässen Massnahmen können in allen Ausführungen von solchen oder noch zu entwickelnden Wärmetauschersystemen zum Einsatz kommen.

Das Wärmetauschersystem gemäss Fig. 1 ist mit einem Kupferband versehen, das stromaufwärts von der Wärmetauschfläche angebracht ist und sich quer über die untere Hälfte der Kanalisationsröhre erstreckt. Das Kupferband besitzt eine Breite *b* von 2 cm und eine Dicke von zwischen 0,5 mm und 5 mm. Es kann in eine eigens vorgesehene Rille in einem Wärmetauscherelement eingebracht, auf ein Wärmetauscherelement aufgebracht oder neben einem Wärmetauscherelement bzw. zwischen zwei Wärmetauscherelementen angebracht sein.

In **Fig. 2** sieht man eine Kanalisationsröhre mit mehreren Wärmetauscherelementen. In Strömungsrichung oberhalb des ersten Wärmetauscherelementes und zwischen den Wärmetauscherelementen sind Cu-Bänder angebracht. Die Cu-Bänder sind bspw. in den den Zwischenraum zwischen Wärmetauscherelementen füllenden Mörtel eingelegt. Die Länge der Cu-Bänder ist in dieser Ausführungsform so gewählt, dass sie sich nicht über die ganze untere Hälfte der Kanalisationsröhre erstreckt. Vielmehr reicht sie nur bis zu einer Wasserstandslinie, die dem Wasserstand bei durchschnittlichem Abwasserdurchfluss entspricht. Auf der allenfalls über dieser Wasserstandslinie liegenden Teilfläche der Wärmetauschfläche wird ohnehin eine nur geringe Tendenz zur Anlagerung einer Sielhaut bestehen, da diese Teilfläche immer wieder austrocknet. Im gezeichneten Ausführungsbeispiel ist in jedem Zwischenraum zwischen zwei Wärmetauscherelementen ein Cu-Band angebracht. Selbstverständlich kann auch nur zwischen jedem zweiten, dritten, etc. Wärmetauscherlelement ein Cu-Band bestehen, oder die Cu-Bänder können sowohl auf als auch zwischen den Wärmetauscherelementen oder nur auf Wärmetauscherelementen angebracht sein. Eine Wasseranalyse und/oder der pH-Wert des Abwassers können bei der Bestimmung der notwendigen Cu-Fläche herangezogen werden.

Der Abstand zwischen den Wärmetauscherlementen kann abhängig von der durchschnittlichen Abwasserbeschaffenheit gewählt werden. Es hat sich gezeigt, dass der für die gewünschte Funktion benötigte Abstand von verschiedenen Faktoren abhängt, insbesondere von der Konzentration an Metallen wie Ni, Cr, Zn und Cd im Abwasser. Typischerweise beträgt der optimale Abstand d zwischen zwei Cu-Bändern zwischen 1 m und 10 m, insbesondere zwischen 1 m und 5 m. Wenn das gesamte Wärmetauschersystem nicht länger als der benötigte Abstand ist, reicht ein Cu-Band.

Vorzugsweise sind die Cu-Bänder so angebracht, dass sie ohne Weiteres entfernt bzw. ersetzt werden können. Es ist nämlich damit zu rechnen, dass ihre Lebensdauer diejenige des Wärmetauschersystems deutlich unterschreitet und dass sie bspw. alle 3-10 Jahre ausgewechselt werden müssen.

Bei einer Grenzfläche zwischen einem Edelmetall (bspw. Cu) und einem nicht edlen Metall (bspw. Cr in Chromstahl) kann das nicht edle Metall rascher korrodieren, wenn beide Metalle in Kontakt mit Wasser sind (elektrische Spannungsreihe). Aus diesem Grund kann vorgesehen sein, dass sich die Cu-Bänder oder anders ausgeformte Cu-Elemente und die bspw. aus Chromstahlblech gefertigten Wärmetauscher nicht berühren. Dies kann dadurch bewirkt werden, dass zwischen den Wärmetauscherelementen und den Cu-Bändern ein Silikonanstrich vorgesehen ist. Alternativ dazu können die Bänder bspw. weniger breit als der Abstand zwischen benachbarten Wärmetauscherelementen und so angebracht sein, dass sie diese nicht berühren sondern nur mit Mörtel in Kontakt kommen. Auch andere Massnahmen sind denkbar.

Obwohl es aus praktischen Gründen besonders günstig ist, wenn die Oberflächenbereiche aus Cu oder einer Cu-Legierung in der Form von Bändern vorliegt, ist das keinesfalls notwendig. In **Fig. 3** ist in einer schematischen Draufsicht eine Ausführungsform gezeigt, in welcher die Oberflächenbereiche eine mehr oder weniger willkürlich gewählte Form aufweisen. Bei einer meist laminaren Abwasserströmung ist der Oberflächenbereich/sind die Oberflächenbereiche aus Cu oder einer Cu-Legierung so gewählt, dass die meisten der Strömungstrajektorien 12 über das Cu führen. Dies führt zur näherungsweisen Bedingung, dass bei einer Projektion auf eine Konturlinie 13 entlang der Strömungsrichtung bzw. entgegen der Strömungsrichtung die Oberflächenbereiche mindestens die Hälfte eines unteren Abschnitts der Konturlinie ausmachen. In der Zeichnung ist die schematische Projektion Bereiche durch fette Linien dargestellt.

Bei einer turbulenten Strömung entfällt diese Bedingung, da dort das Abwasser durch Verwirbelung durchmischt wird. Die Ausführungsform gemäss **Fig. 4** weist einen Oberflächenbereich aus Cu oder einer Cu-Legierung und daran anschliessend eine Schikane zur Erzeugung einer Verwirbelung auf. In Strömungsrichtung nach der Schikane ist ein Wärmetauscherelement angebracht. Aufgrund der Verwirbelung ist gewährleistet, dass nach der Schikane ein Grossteil des Abwassers eine gewisse Cu-Konzentration aufweist, welche der Bildung einer Sielhaut entgegenwirken kann.

## Patentansprüche

1. Wärmetauschersystem für die Entnahme von Wärme aus in einer Kanalisation oder einem Abwasserkanal fliessendem Abwasser, aufweisend mindestens ein in die Kanalisation bzw. den Abwasserkanal einbringbares Wärmetauscherelement, mit mindestens einem Oberflächenbereich aus Kupfer, einer Kupferlegierung oder einer Kupferverbindung, **dadurch gekennzeichet dass** die gesamte Fläche des Oberflächenbereiches bzw. der Oberflächenbereiche kleiner ist als eine gesamte metallische Wärmetauschfläche des Wärmetauschersystems.

2. Wärmtauschersystem nach Anspruch 1, **dadurch gekennzeichnet, das**s die gesamte Flache des Oberflächenbereiches oder der Oberflächenbereiche kleiner als 5% der Wärmetauschfläche, vorzugsweise kleiner als 2% der Wärmetauschfläche ist.

3. Wärmetauschersystem nach Anspruch 1 oder 2, **dadurch gekennzeichnet, dass** der Oberflächenbereich oder mindestens einer der Oberflächenbereiche aus Kupfer, einer Kupferlegierung oder einer Kupferverbindung in Strömungsrichtung vor der Wärmetauschfläche eines ersten Wärmetauschelementes oder am Anfang der Wärmetauschfläche eines ersten Wärmetauschelementes angeordnet ist bzw. sind.

4. Wärmetauschersystem nach Anspruch 3, **dadurch gekennzeichnet, dass** dem Oberflächenbereich oder den Oberflächenbereichen am Anfang des ersten Wärmetauschelementes weitere Oberflächenbereiche aus Kupfer, einer Kupferlegierung oder einer Kupferverbindung in regelmässigen Abständen folgen.

5. Wärmetauschersystem nach einem der vorangehenden Ansprüche, **dadurch gekennzeichnet, dass** die Oberflächenbereiche so angebracht sind, dass bei durchschnittlicher Durchflussmenge sie von einem Grossteil des Abwassers überströmt werden.

6. Wärmetauschersystem nach einem der vorangehenden Ansprüche, **dadurch gekennzeichnet, dass** die Oberflächenbereiche durch Oberflächen von zur Strömungsrichtung im Wesentlichen quer verlaufenden Bändern aus Kupfer, einer Kupferlegierung oder einer Kupferverbindung gebildet werden.

7. Wärmetauschersystem nach Anspruch 6, **dadurch gekennzeichnet, dass** die Bänder neben bzw. zwischen Wärmetauscherelementen angeordnet sind.

8. Wärmetauschersystem nach Anspruch 6, **dadurch gekennzeichnet, dass** die Bänder auf Wärmetauscherelementen aufgebracht oder in Rillen der Wärmetauscherelemente eingebracht sind.

9. Installation zur Entnahme von Wärme aus Abwasser, aufweisend eine Wärmepumpe, ein Kreislaufsystem für eine Wärmeaustauschflüssigkeit und ein Wärmetauschersystem nach einem der Ansprüche 1 bis 8.

## Claims

1. A heat exchanger system for extracting heat from waste water flowing in a sewer system or a sewer, comprising at least one heat exchanger element that can be introduced in the sewer system or sewer, with at least one surface region made of copper, of a copper alloy or of a copper compound, **characterized in that** the overall area of the at least one surface region is smaller than an overall metallic heat exchanger surface area of the heat exchanger system.

2. A heat exchanger system in accordance with claim 1, **characterised in that** the overall area of the surface region or of the surface regions is smaller than 5 % of the heat exchanger surface area, preferably smaller than 2 % of the heat exchanger surface area.

3. A heat exchanger system in accordance with claim 1 or 2, **characterised in that** the surface region or at least one of the surface regions made of copper, of a copper alloy or of a copper compound is arranged ahead of the heat exchanger surface of a first heat exchanger element in the direction of flow or is arranged at the beginning of the heat exchanger surface of a first heat exchanger element.

4. A heat exchanger system in accordance with claim 3, **characterised in that** the surface area or the surface areas at the beginning of the first heat exchanger element is/are followed at regular distances by further surface regions made of copper, of a copper alloy or of a copper compound.

5. A heat exchanger system in accordance with one of the preceding claims, **characterised in that**, the surface areas are arranged in such a manner, that in the case of an average flow rate they are flowed over by a major proportion of the waste water.

6. A heat exchanger system in accordance with one of the preceding claims, **characterised in that** the surface regions are formed by surfaces of bands of copper, of a cooper alloy or of a copper compound, which are arranged in a transverse direction to the direction of flow.

7. A heat exchanger system in accordance with claim 6, **characterised in that** the bands are arranged next to heat exchanger elements, or between heat exchanger elements.

8. A heat exchanger system in accordance with claim 6, **characterised in that** the bands are installed on heat exchanger elements or in grooves of heat exchanger elements.

9. An installation for extracting heat from waste water, comprising a heat pump, a circulation system for a heat exchanger liquid medium and a heat exchanger system in accordance with one of the claims 1 to 8.

## Revendications

1. Système d'échangeur de chaleur pour capter la chaleur d'eaux d'évacuation coulant dans une canalisation ou d'un canal d'évacuation des eaux comprenant au moins un élément échangeur de chaleur apte à être introduit dans la canalisation ou le canal d'évacuation, avec au moins une zone de surface faite de cuivre, d'un alliage de cuivre ou d'un composé de cuivre, **caractérisé en ce que** l'aire totale de la zone de surface ou des zones de surface est inférieure à une surface totale d'échange de chaleur du système d'échangeur de chaleur.

2. Système d'échangeur de chaleur selon la revendication 1, **caractérisé en ce que** l'aire totale de la zone de surface ou des zones de surface est inférieure à 5 % de la surface d'échange de chaleur, de préférence inférieure à 2 % de la surface d'échange de chaleur.

3. Système d'échangeur de chaleur selon la revendication 1 ou 2, **caractérisé en ce que** la zone de surface ou une au moins des zones de surface faites de cuivre, d'un alliage de cuivre ou d'un composé de cuivre est disposée en amont dans le sens du flux de la surface d'échange de chaleur d'un premier élément échangeur de chaleur ou au début de la surface d'échange de chaleur d'un premier élément échangeur de chaleur.

4. Système d'échangeur de chaleur selon la revendication 3, **caractérisé en ce que** la zone de surface ou les zones de surface au début du premier élément échangeur de chaleur sont suivies à intervalles réguliers d'autres zones de surface faites de cuivre, d'un alliage de cuivre ou d'un composé de cuivre.

5. Système d'échangeur de chaleur selon l'une des revendications précédentes, **caractérisé en ce que** les zones de surface sont disposées de telle sorte qu'elles soient parcourues par une grande partie de l'eau d'évacuation à un débit de circulation moyen.

6. Système d'échangeur de chaleur selon l'une des revendications précédentes, **caractérisé en ce que** les zones de surface sont formées par des surfaces en forme de bandes faites de cuivre, d'un alliage de cuivre ou d'un complexe de cuivre, sensiblement perpendiculaires au sens d'écoulement.

7. Système d'échangeur de chaleur selon la revendication 6, **caractérisé en ce que** les bandes sont disposées à côté des éléments échangeurs de chaleur ou entre ceux-ci.

8. Système d'échangeur de chaleur selon la revendication 6, **caractérisé en ce que** les bandes sont appliquées sur des éléments échangeurs de chaleur ou introduites dans des nervures des éléments échangeurs de chaleur.

9. Installation pour capter la chaleur d'eaux d'évacuation, comprenant une pompe à chaleur, un système de circulation pour un liquide échangeur de chaleur et un système d'échangeur de chaleur selon l'une des revendications 1 à 8.
